# EUROPÄISCHE PATENTSCHRIFT

(11) **EP 2 774 748 B1**
(45) Veröffentlichungstag und Bekanntmachung des Hinweises auf die Patenterteilung: **27.09.2017**
(21) Anmeldenummer: 14157998.7
(22) Anmeldetag: 06.03.2014
(51) Int. Cl.: B29C 67/24, B29C 35/08

(54) **VERFAHREN UND VORRICHTUNG ZUR HERSTELLUNG VON KUNSTSTOFFFORMKÖRPERN AUS EINEM GEMISCH MEHRERER KOMPONENTEN**
METHOD AND DEVICE FOR PRODUCING PLASTIC MOULDED BODIES FROM A MIXTURE OF SEVERAL COMPONENTS
PROCÉDÉ ET DISPOSITIF DE FABRICATION DE CORPS MOULÉS EN MATIÈRE SYNTHÉTIQUE À PARTIR D'UN MÉLANGE DE PLUSIEURS COMPOSANTS

(30) Priorität: 06.03.2013 DE 102013102236
(43) Veröffentlichungstag der Anmeldung: 10.09.2014
(73) Patentinhaber: Verfahrenstechnik Hübers GmbH, 46395 Bocholt (DE)
(72) Erfinder: Terhardt, Josef, 46414 Rhede (DE); Terhardt, Dominik, 46414 Rhede (DE); Rütters, Matthias, 47551 Bedburg-Hau (DE); Wilting, Bernfried, 46325 Borken-Burlo (DE)
(74) Vertreter: Cohausz & Florack

(56) Entgegenhaltungen:
- EP-A1- 2 674 284
- EP-A2- 0 616 843
- DE-A1- 4 119 415
- DE-A1- 19 961 990
- DE-A1-102004 036 573
- DE-C2- 19 647 922
- US-A1- 2001 008 485

## Beschreibung

Die Erfindung betrifft zunächst ein Verfahren zur Herstellung von Kunststoffformkörpern aus einem Gemisch mehrerer Komponenten, von denen wenigstens eine mittels UV-Licht aushärtet, wobei die lichtempfindliche Komponente ohne Lichteinfall gelagert und in einem Dosiermischer vakuumaufbereitet wird und wobei die Komponenten über Dosierpumpen im richtigen Mischungsverhältnis in einem statischen Mischer ohne Lichtkontakt gemischt werden und ferner eine Vorrichtung zur Herstellung von Kunststoffformkörpern aus einem Gemisch mehrerer Komponenten, von denen wenigstens eine mittels UV-Licht aushärtet, mit einer Gießform und mit wenigstens einer UV-Licht-Bestrahlungseinheit zum Aktivieren des lichtempfindlichen Gemisches.

Es ist bekannt, Verbund-Kunststoffformkörper aus mehreren Komponenten herzustellen, die miteinander vermischt werden und erst durch die Bestrahlung mit UV-Licht zur Aushärtung gebracht werden, wenn wenigstens eine Komponenten UVlichtempfindlich ist. Diese Technik wird beispielsweise bei Dentalfüllungen eingesetzt, wobei zunächst das Kunststoffverbundgemisch in den auszufüllenden Hohlraum eingebracht wird und erst dort mittels der Bestrahlung durch eine UV-Lampe zur Aushärtung gebracht wird. Eine solche in-situ-Anwendung lässt sich natürlich nicht auf innerhalb einer Gießform auszuhärtende Formkörper übertragen, da die Gießformen regelmäßig aus (stabilem) Stahl hergestellt sind und eine in-situ-Bestrahlung eine durchsichtige Glasform benötigen würde, welche den auftretenden Drücken nicht gewachsen wäre.

Davon ausgehend liegt der Erfindung die Aufgabe zugrunde, ein entsprechendes Verfahren so auszugestalten und weiterzubilden, dass auch die Herstellung von Verbund-Kunststoffformkörpern in herkömmlichen geteilten Gießformen möglich ist, bei denen wenigstens eine Komponente mittels UV-Licht aushärtet.

Aus der DE 41 19 415 A1, welche auf die gleiche Patentinhaberin zurückgeht, sind ein Verfahren und eine Vorrichtung zur Verarbeitung eines Gießharzes aus zwei Komponenten bekannt, wobei jede Komponente in einem Dosiermischer vakuumaufbereitet wird und die Komponenten über Dosierpumpen im richtigen Mischungsverhältnis in einem statischen Mischer gemischt werden, bevor sie in eine Gießform fließen.

Die DE 199 61 990 A1 beschreibt ein Verfahren und eine Vorrichtung zur Beschichtung eines Innenausbauteils für Kraftfahrzeuge. Insbesondere offenbart sie ein Verfahren zur Herstellung von Kunststoffformkörpern aus einem Gemisch mehrerer Komponenten, von denen eine mittels UV-Licht aushärtet. Dazu wird das Gemisch einer UV-Licht-Bestrahlungseinheit zugeführt und dort von der UV-Strahlung bestrahlt. Das so aktivierte Gemisch fließt anschließend in die Gießform, wo es endgültig aushärtet.

Gelöst wird diese Aufgabe bei einem Verfahren mit allen Merkmalen von Patentanspruch 1.

Eine entsprechende erfindungsgemäße Vorrichtung gemäß dem Oberbegriff von Patentanspruch 7 löst die Aufgabe dadurch, dass die wenigstens eine UV-Licht-Bestrahlungseinheit ein umschlossenes Gehäuse mit einem Eingang und einem Ausgang für das Gemisch aufweist, dass das Gemisch durch ein Glasrohr durch das Gehäuse fließt, dass zur Messung der UV-Strahlungsintensität im Gehäuse ein UV-Intensitätssensor angeordnet ist, dass die UV-Lichtquelle als UV-Strahler ausgebildet ist, und dass die Vorrichtung mehrere der Anzahl der Komponenten entsprechende Dosiermischer zur Vakuumaufbereitung der einzelnen Komponenten, wobei jedem Dosiermischer eine Dosierpumpe nachgeordnet ist und wenigstens einen statischen Mischer aufweist.

Die Erfindung hat erkannt, dass aufgrund des Zeitverlaufes bei der Aushärtung mittels UV-Strahlung noch ein ausreichend langer Zeitraum zur Verfügung steht, um das aktivierte Kunststoff-Verbundgemisch in die Gießform zu fördern, bevor es dort endgültig aushärtet. Es ist klar, dass vor der Bestrahlung mit UV-Licht die UV-lichtempfindliche Komponente zuverlässig vor Lichtkontakt geschützt werden muss.

Erfindungsgemäß ist vorgesehen, dass die UV-Strahlenintensität im Verhältnis zur Durchflussmenge des Verbundgemisches geregelt wird. Auf diese Weise ist sichergestellt, dass die benötigte Zeit, die das Verbundgemisch vom Kontakt mit UV-Licht bis in die Gießform braucht, mit der Aushärte- bzw. Vernetzungszeit korreliert. Dazu wird bevorzugt auch die Temperatur des Gemisches in der UV-Licht-Bestrahlungseinheit überwacht.

Nach bevorzugten Lehren der Erfindung ist das Verbundgemisch ein UV-aushärtendes Zweikomponenten- oder Dreikomponenten-Silikon.

Nach einer weiteren Ausbildung der Erfindung kann die UV-Licht-Bestrahlungseinheit zu Reinigungs- oder Wartungszwecken geöffnet und/oder geteilt werden.

Eine andere bevorzugte Lehre der Erfindung sieht vor, dass die Herstellung mittels einer Dreikomponenten- Vakuum- Misch- und Dosieranlage erfolgt, in der vor der UV-Licht-Bestrahlung zwei der Komponenten gemischt werden und zwischen der Bestrahlung und dem Eintritt in die Gießform das Zumischen der dritten Komponente erfolgt.

Nach einer anderen Lehre der Erfindung ist die wenigstens eine UV-Licht-Bestrahlungseinheit unmittelbar vor der Gießform angeordnet. Es ist klar, dass bei entsprechend großen Gießformen mehrere UV-Licht-Bestrahlungseinheiten vorgesehen sind, welche dann gleichfalls unmittelbar vor der Gießform angeordnet sind, um den zurückzulegenden Weg des Gemisches so kurz wie möglich zu halten.

Nach einer weiteren Ausgestaltung der Erfindung ist vorgesehen, dass die wenigstens eine UV-Licht-Bestrahlungseinheit ein umschlossenes Gehäuse mit einem Eingang und einem Ausgang für das Gemisch aufweist und dass das Gemisch durch ein Glasrohr durch das Gehäuse fließt. Diese Ausführungsform lässt sich einerseits gut reinigen und andererseits beliebige Leitungsquerschnitte anpassen, um verschiedensten Gießformgrößen und -geometrien gerecht zu werden.

Eine weitere Lehre der Erfindung sieht vor, dass sich zwischen der UV-Licht-Bestrahlungseinheit und der Gießform eine Zuführeinheit zum Einspritzen der dritten Komponente in den Fluss des Gemisches aus den beiden ersten Komponenten befindet. Dazu weist die Zuführeinheit bevorzugt mehrere über ihren Umfang verteilt angeordnete seitliche Einspritzdüsen auf und ist der Fluss der dritten Komponente vor der Zuführeinheit entsprechend aufgeteilt. Besonders bevorzugt sind dazu zwei Einspritzdüsen auf gegenüber liegenden Seiten der Zuführeinheit vorgesehen.

Es ist aus Reinigungs- und Wartungsgründen besonders zweckmäßig, wenn die Einspritzdüsen auswechselbar ausgestaltet sind.

Um eine gleichmäßige Vermischung aller Komponenten zu erreichen, ist nach einer weiteren Lehre der Erfindung hinter der Zuführeinheit ein statischer Mischer angeordnet, um auch die dritte Komponente mit dem bereits reaktiven Gemisch der beiden anderen Komponenten ausreichend zu durchmischen.

Eine weitere Ausbildung der Erfindung sieht vor, dass das Gehäuse der Zuführeinheit mehrere Teile aufweist und dass zum Zusammenhalten des Gehäuses Magnete vorgesehen sind.

Besonders zweckmäßig ist es, wenn nach einer anderen Ausgestaltung der Erfindung die Zuführeinheit auf die UV-Licht-Bestrahlungseinheit mit Hilfe von Magneten aufsteckbar ist. Dies erleichtert nicht nur die Montage sondern auch den Gießvorgang als solchen, da in der Regel die aus UV-Licht-Bestrahlungseinheit und der Zuführeinheit gebildete Einheit vor dem Füllvorgang in Richtung der Gießform bewegt werden muss und anschließend eine erneute Bewegung in umgekehrter Richtung erfolgt.

Zum Schutz des UV-Strahlers ist dieser bevorzugt von einem Glasrohr umgeben.

Zur Kühlung des Gehäuses der UV-Licht-Bestrahlungseinheit bzw. des UV-Strahlers sind nach einer weiteren Lehre der Erfindung unterschiedliche Lüfter vorgesehen, welche zuverlässig für eine Wärmeabfuhr im Gehäuse sorgen.

Zur besseren Verteilung und Einbringung der UV-Strahlung in das Kunststoff-Verbundgemisch ist das Gehäuse innen mit Spiegelreflektoren versehen, welche bevorzugt eine ellipsenförmige Anordnung aufweisen, wobei das Glasrohr zur Masseführung in dem einen Brennpunkt und der UV-Strahler im anderen Brennpunkt der Ellipse angeordnet sind. Durch diese Anordnung ist sichergestellt, dass die Lichtausbeute des UV-Strahlers optimal für den Aushärteprozess eingesetzt wird, indem die UV-Behandlungsstrecke möglichst gleichmäßig von allen Seiten mit UV-Licht beaufschlagt ist.

Nach einer weiteren Lehre der Erfindung ist vorgesehen, dass das Gehäuse im Bereich des Glasrohres für das Gemisch eine Öffnungsebene aufweist. Bevorzugt fluchtet diese Öffnungsebene mit der Trennebene der Gießform und lässt sich das Gehäuse auch gemeinsam mit der Gießform öffnen. Auf diese Weise kann auf einen separaten Antrieb zur Öffnung des Gehäuses verzichtet werden.

Eine weitere Ausbildung der Erfindung sieht vor, dass zum Schutz gegen UV-Strahlung und Blendung bei geöffneter Gießform eine Blendschutzkappe vor den UV-Strahler bewegbar ist. Dies geschieht zweckmäßiger Weise über einen pneumatischen oder auch elektrischen Antrieb.

Eine weitere Lehre der Erfindung sieht vor, dass zur Temperaturmessung und -überwachung im Gehäuse ein Pyrometer, insbesondere ein Miniatur-Pyrometer angeordnet ist. Dieser Pyrometer sitzt zweckmäßiger Weise unmittelbar an dem den UV-Strahler umgebenden Glasrohr.

Zur Messung der UV-Strahlungsintensität ist im Gehäuse ein UV-Intensitätssensor vorgesehen. In Verbindung mit einer entsprechenden Software wird die UV-Strahlungsintensität mit Bezug auf die Durchflussmenge des Verbundgemisches geregelt.

Eine weitere Ausbildung der Erfindung sieht vor, dass im Gehäuse ein Widerstandsthermometer vorhanden ist, welches zweckmäßiger Weise im Eingangsbereich des Gehäuses angeordnet ist.

In einem weiteren Ausführungsbeispiel der Erfindung ist die UV-Lichtquelle außerhalb der UV-Licht-Bestrahlungseinheit angeordnet und sind zur Übertragung des UV-Lichts von der UV-Lichtquelle zur Bestrahlungsstrecke Lichtwellenleiter vorhanden, die in der Behandlungsstrecke münden.

Nach einer weiteren Lehre der Erfindung münden die Lichtwellenleiter in einem eine Behandlungsstrecke bildenden Gehäuse. Bevorzugt sind sie dort sternförmig zur Mitte der Behandlungsstrecke ausgerichtet und werden in der Behandlungsstrecke von dem Verbundgemisch umströmt.

Ein modularer Aufbau der erfindungsgemäßen Vorrichtung wird dadurch ermöglicht, dass in weiterer Ausgestaltung der Erfindung zur Erhöhung der UV-Strahlungsleistung mehrere sternförmige Lichtwellenleiter in parallelen Ebenen übereinander angeordnet sind. Auf diese Weise können unterschiedlich große Formkörper mittels der erfindungsgemäßen Vorrichtung hergestellt werden.

Eine weitere Lehre der Erfindung sieht vor, dass das Gehäuse im Bereich der Behandlungsstrecke für das Gemisch eine Öffnungsebene aufweist. Die Vorteile eines teilbaren Gehäuses wurden bereits weiter oben beschrieben. Zweckmäßiger Weise weist dann die Behandlungsstrecke auch ein teilbares Glasrohr zur Masseführung auf. Zweckmäßiger Weise weisen die beiden Hälften des Glasrohres an ihren Kontaktstellen entsprechende Dichtungen auf.

Eine konstruktiv besonders elegante Lösung ist dann erreicht, wenn in weiterer Ausbildung der Erfindung das Gehäuse zwei Halbschalen aufweist, von denen jeweils eine Halbschale an einer darüber angeordneten Gießformhälfte befestigt ist.

Die Erfindung wird nachfolgend anhand einer lediglich Ausführungsbeispiele darstellenden Zeichnung näher erläutert. In der Zeichnung zeigen:
- Fig. 1: den schematischen Aufbau einer ersten erfindungsgemäßen Vorrichtung,
- Fig. 2: die UV-Licht-Bestrahlungseinheit und die Gießform aus Fig. 1 in vergrößerter Darstellung,
- Fig. 3: die UV-Licht-Bestrahlungseinheit gemäß Fig. 1 oder 2 im Vertikalschnitt,
- Fig. 4: die UV-Licht-Bestrahlungseinheit aus Fig. 3 im Horizontalschnitt durch die Ebene IV-IV,
- Fig. 5: eine Draufsicht auf ein weiteres Ausführungsbeispiel einer UV-Licht-Bestrahlungseinheit,
- Fig. 6: den Gegenstand aus Fig. 5 im Vertikalschnitt,
- Fig. 7: den Gegenstand aus Figuren 5 und 6, geöffnet, in perspektivischer Darstellung Und
- Fig. 8: den schematischen Aufbau einer weiteren erfindungsgemäßen Vorrichtung,
- Fig. 9: die UV-Licht-Bestrahlungseinheit, Gießform und die Zuführeinheit aus Fig. 8 in vergrößerter Darstellung und
- Fig. 10: die Zuführeinheit gemäß Fig. 8 oder 9 in Draufsicht und
- Fig. 11 und 12: die Zuführeinheit im Vertikalschnitt entlang der Linien XI-XI und XII-XII in Fig. 10.

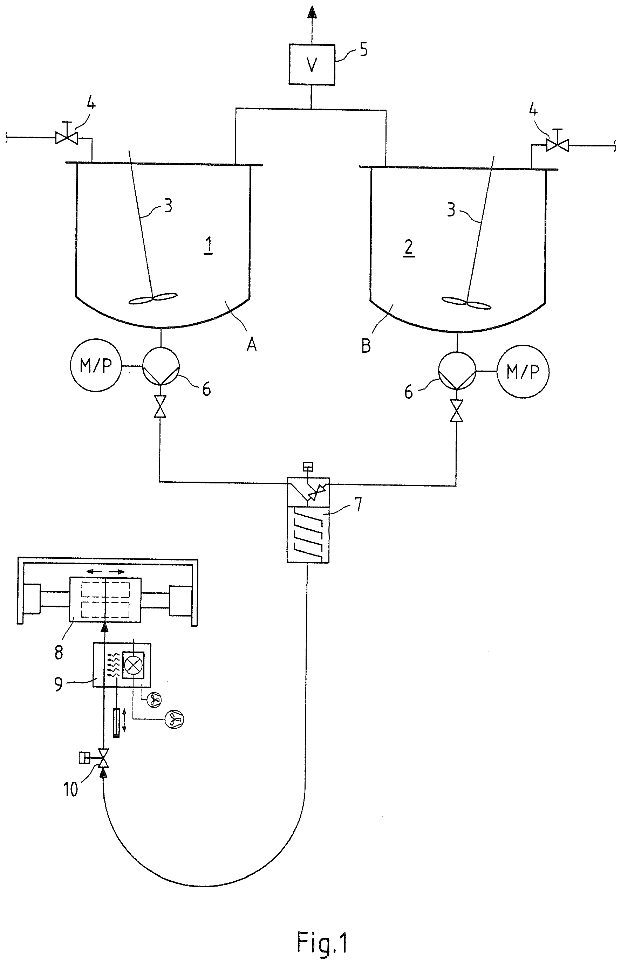

In den Figuren 1 bis 4 ist zunächst ein erstes Ausführungsbeispiel dargestellt. In Fig. 1 ist dabei in schematischer Darstellung eine erfindungsgemäße Vorrichtung zur Herstellung von Kunststoffformkörpern aus einem Gemisch zweier Komponenten A, B dargestellt. Eine dieser Komponenten härtet mittels UV-Licht aus und muss daher vor der eigentlichen UV-Behandlung zuverlässig lichtgeschützt gelagert und aufbereitet werden. Fig. 1 zeigt zunächst zwei Dosiermischer 1 und 2, welche jeweils mit einem Rührwerk 3 ausgestattet sind. Über Einlassventile 4 werden die beiden Komponenten A und B aus (nicht dargestellten) jeweiligen Vorratsbehältern in die Dosiermischer 1 und 2 gegeben, in denen sie unter Vakuum mittels einer Vakuumpumpe 5 über einen vorgegebenen Zeitraum entgast werden, damit sich keinerlei Luftbläschen mehr in den einzelnen Komponenten befinden. Unterhalb der Dosiermischer 1 und 2 ist jeweils eine Dosierpumpe 6 angeordnet, welche die beiden entgasten Komponenten A und B im gewünschten Verhältnis einem statischen Mischer 7 zuführen, in dem aus den beiden entgasten einzelnen Komponenten A und B ein Verbundgemisch AB entsteht. Dieses Verbundgemisch AB wird, gleichfalls mittels der Dosierpumpe 6, einer Gießform 8 zugeführt, der eine UV-Licht-Bestrahlungseinheit 9 vorgeschaltet ist. Ein Absperrventil 10 stoppt den weiteren Zufluss des Verbundgemisches AB nach vollständiger Füllung der Gießform 8. In der gesamten Leitung des Gemisches AB bis zum Erreichen der UV-Licht-Bestrahlungseinheit 9 muss zuverlässig jeglicher Lichtkontakt vermieden werden.

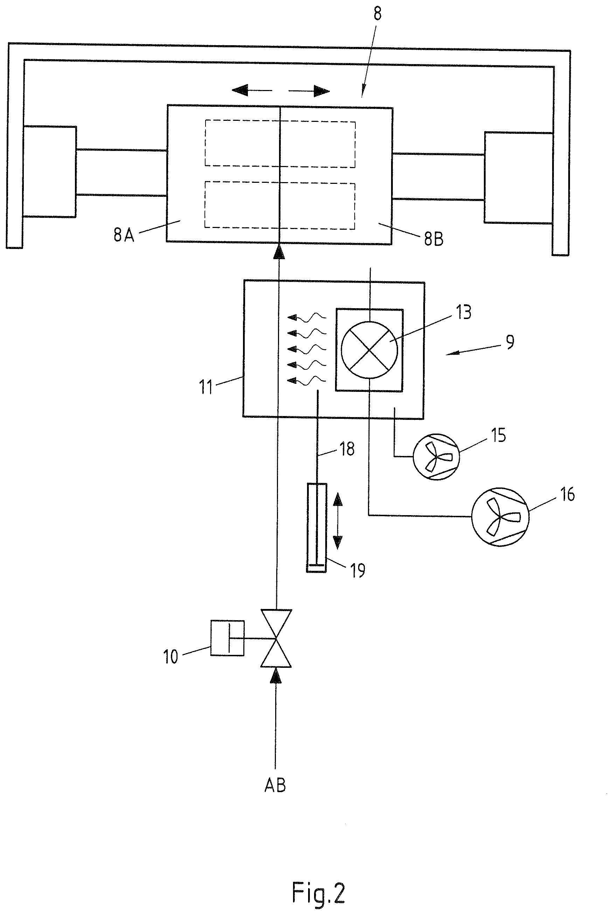

In Fig. 2 sind die Gießform 8 und die UV-Licht-Bestrahlungseinheit 9 vergrößert dargestellt. Man erkennt zunächst, dass die Gießform 8 aus zwei Gießformhälften 8A und 8B besteht, welche mittels einer nicht näher bezeichneten Schließeinheit geöffnet und geschlossen werden können. Die vorgeschaltete UV-Licht-Bestrahlungseinheit 9 weist ein Gehäuse 11 auf, durch das das Verbundgemisch AB geführt wird und in dessen Innerem die UV-Licht-Bestrahlung des Gemisches AB stattfindet.

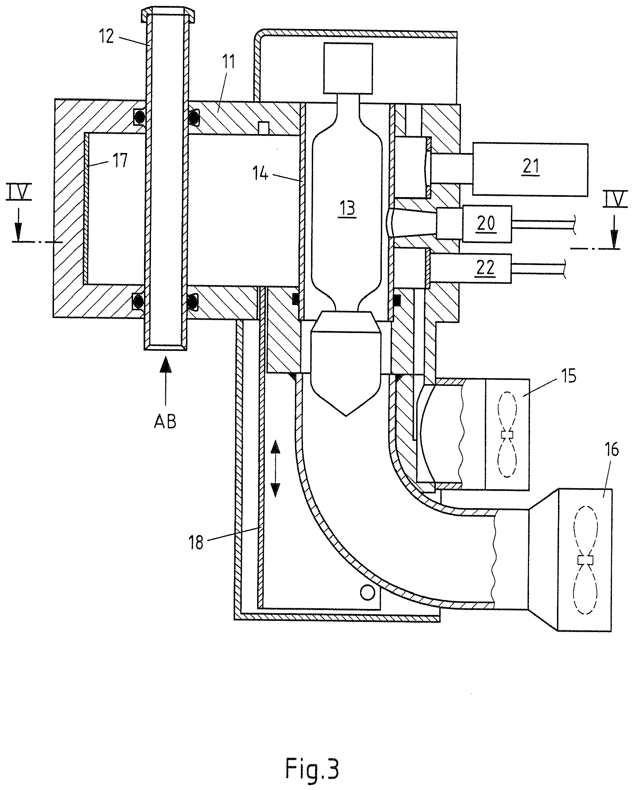

Fig. 3 zeigt eine detailliertere UV-Licht-Bestrahlungseinheit 9, in der erkennbar ist, dass das Gehäuse 11 mit einem Eingang und einem Ausgang für das Gemisch AB versehen ist und dass das Gemisch AB durch ein Glasrohr 12 durch das Gehäuse 11 fließt. Ein UV-Strahler 13 ist in einem weiteren Glasrohr 14 im Inneren des Gehäuses 11 angeordnet. Ein erster Lüfter 15 sorgt für eine Kühlung des Gehäuseinneren und ein zweiter Lüfter 16 kühlt den UV-Strahler 13 im Inneren des Glasrohres 14. Auf diese Weise lässt sich das Gehäuse 11 und der UV-Strahler 13 separat und unabhängig voneinander kühlen.

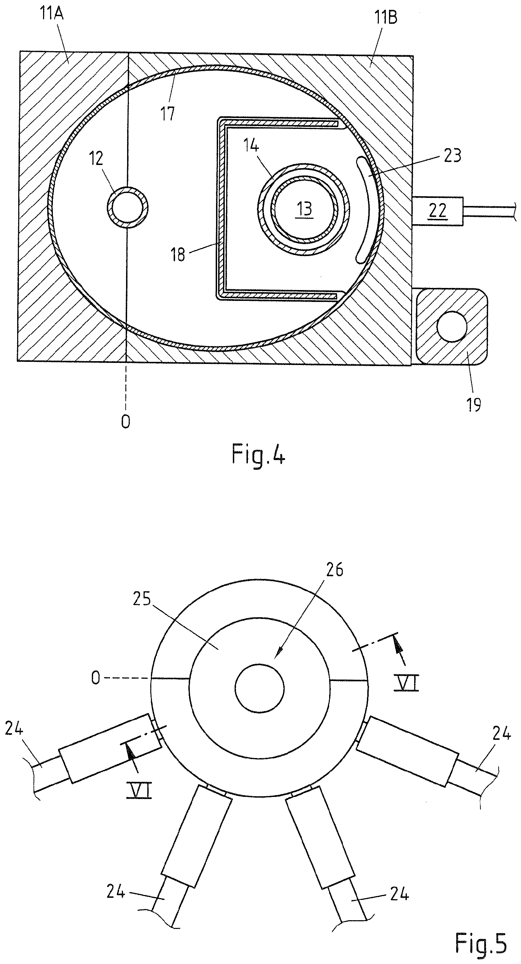

Zur besseren Verteilung und Einbringung der UV-Strahlen in das Verbundgemisch AB ist das Gehäuse 11 in seinem Inneren mit Spiegelreflektoren 17 versehen, welche im dargestellten und insoweit bevorzugten Ausführungsbeispiel eine ellipsenförmige Anordnung aufweisen, wie insbesondere aus Fig. 4 zu entnehmen ist. Das Glasrohr 12 zur Masseführung befindet sich dabei im ersten Brennpunkt der Ellipse und der UV-Strahler 13 im zweiten Brennpunkt, so dass durch die Spiegelreflektoren eine äußerst gleichmäßige Beaufschlagung des durch das Glasrohr 12 geförderten Verbundgemisches AB erfolgt, um eine gleichmäßige Einbringung der UV-Strahlen in das Gemisch AB zu erreichen.

Aus Fig. 4 geht ferner hervor, dass das Gehäuse 11 im Bereich des Glasrohres 12 für das Gemisch AB eine Öffnungsebene O aufweist. Zum Schutz gegen UV-Strahlung und Blendung bei geöffnetem Gehäuse 11 ist eine Blendschutzkappe 18 vorgesehen, welche mit einem beispielsweise pneumatischen Antrieb 19 vor den UV-Strahler verfahrbar ist, wie durch den Doppelpfeil in Fig. 3 angedeutet ist.

Aus Fig. 2 ist zu entnehmen, dass die Öffnungsebene O im bevorzugten Ausführungsbeispiel mit der Trennebene der Gießform 8 fluchtet. Zweckmäßiger Weise erfolgt das Öffnen des Gehäuses 11 gemeinsam mit der Öffnung der Gießform 8, indem die UV-Licht-Bestrahlungseinheit 9 mit ihren einzelnen Bestandteilen 11A bzw. 11B an den jeweiligen Gießformhälften 8A bzw. 8B befestigt sind.

Aus Fig. 3 ist ferner ersichtlich, dass zur Überwachung der UV-Bestrahlungsstrecke am Gehäuse ein Pyrometer 20 zur Temperaturmessung und -überwachung, ein UV-Intensitätssensor 21 zur Messung der UV-Strahlungsintensität und ein Widerstandthermometer 22 angeordnet sind.

Die Figuren 5 bis 7 zeigen ein weiteres Ausführungsbeispiel einer UV-Licht-Bestrahlungseinheit 9, wobei die UV-Lichtquelle (nicht dargestellt) außerhalb der UV-Licht-Bestrahlungseinheit angeordnet ist und zur Übertragung des UV-Lichts von der UV-Lichtquelle zur Behandlungsstrecke Lichtwellenleiter 24 verwendet werden.

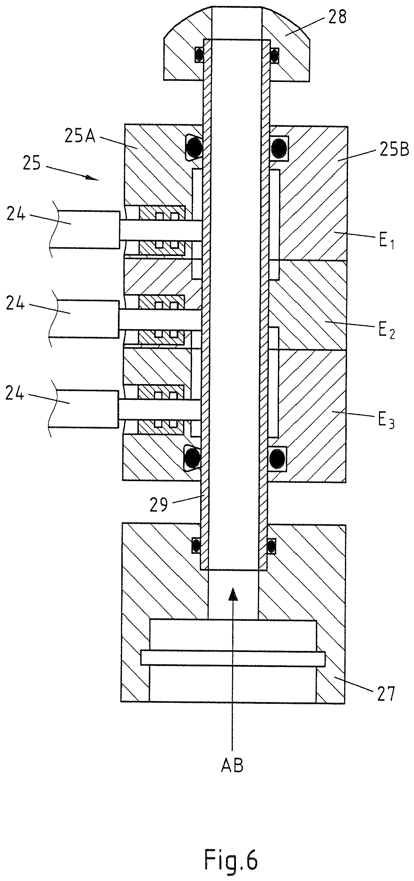

Fig. 5 zeigt, dass mehrere, im dargestellten Ausführungsbeispiel vier, Lichtwellenleiter 24 sternförmig in ein Gehäuse 25 führen, in dessen Innerem eine senkrecht zu den Lichtwellenleitern 24 verlaufende UV-Behandlungsstrecke 26 verläuft. Zweckmäßiger Weise ist auch das Gehäuse 25 teilbar. Die beiden Gehäuseteile 25A und 25B sind besonders gut im Vertikalschnitt gemäß Fig. 6 zu erkennen. Das Gehäuse 25 weist an seiner Unterseite einen Adapter 27 für eine Gießdüse (nicht dargestellt) und an seiner Oberseite einen Adapter 28 für die Gießform (nicht dargestellt) auf.

Auch bei der zweiten Ausführungsform ist die UV-Behandlungsstrecke 26 von einem Glasrohr 29 umgeben, welches im dargestellten und insoweit bevorzugten Ausführungsbeispiel in nicht näher bezeichneten O-Ringen im Gehäuse 25 gehalten ist. Dies ist besonders zweckmäßig, da die Enden der Lichtwellenleiter 24 unmittelbar vor der durch die O-Ringe zentrierten Wandung des Glasrohres 29 enden. Durch das Öffnen der beiden Teile 25A, 25B des Gehäuses 25 wird eine einfache Reinigung der UV-Behandlungsstrecke 26 ermöglicht.

Im Ausführungsbeispiel gemäß Fig. 6 ist erkennbar, dass jeweils vier Lichtwellenleiter 24, welche in sternförmiger Anordnung radial in das Gehäuse 25 münden, übereinander angeordnet sind und so mehrere Behandlungsebenen bilden. In der Ausführung gemäß Fig. 6 sind drei übereinander angeordnete Behandlungsebenen E₁, E₂ und E₃ dargestellt. Durch eine Aufteilung des Gehäuses in einzelne "Ringe" wird je nach gewünschter Leistung ein modularer Aufbau der erfindungsgemäßen Vorrichtung ermöglicht.

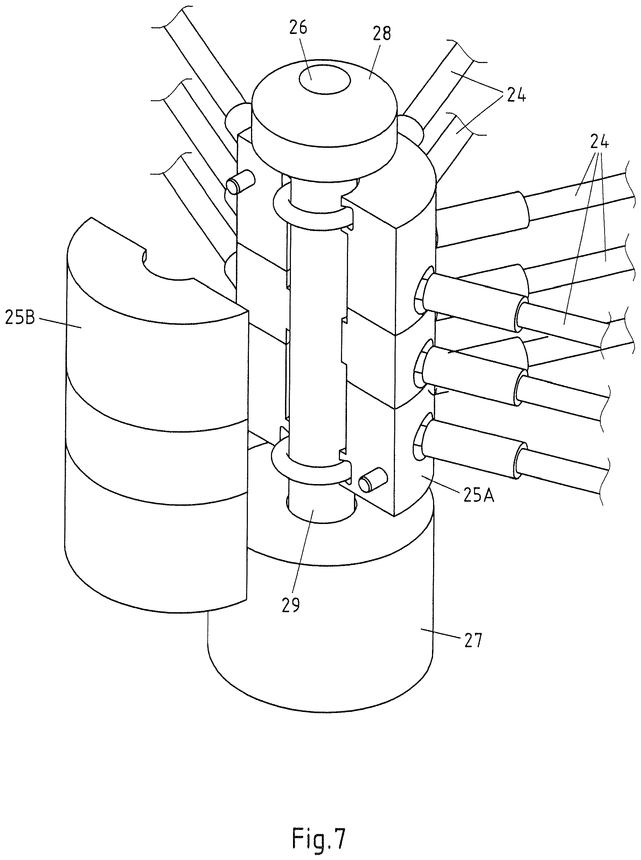

Fig. 7 zeigt in perspektivischer Darstellung das Gehäuse 25 in geöffneter Stellung, wobei die beiden Gehäuseteile 25A und 25B und das Glasrohr 29 der UV-Behandlungsstrecke 26 gut erkennbar sind. Nicht dargestellt ist, dass eine vorgeschaltete Regeleinheit dafür sorgt, dass auch bei dieser Ausführungsvariante die UV-Strahlungsintensität der jeweiligen Durchflussmenge des Gemisches angepasst wird.

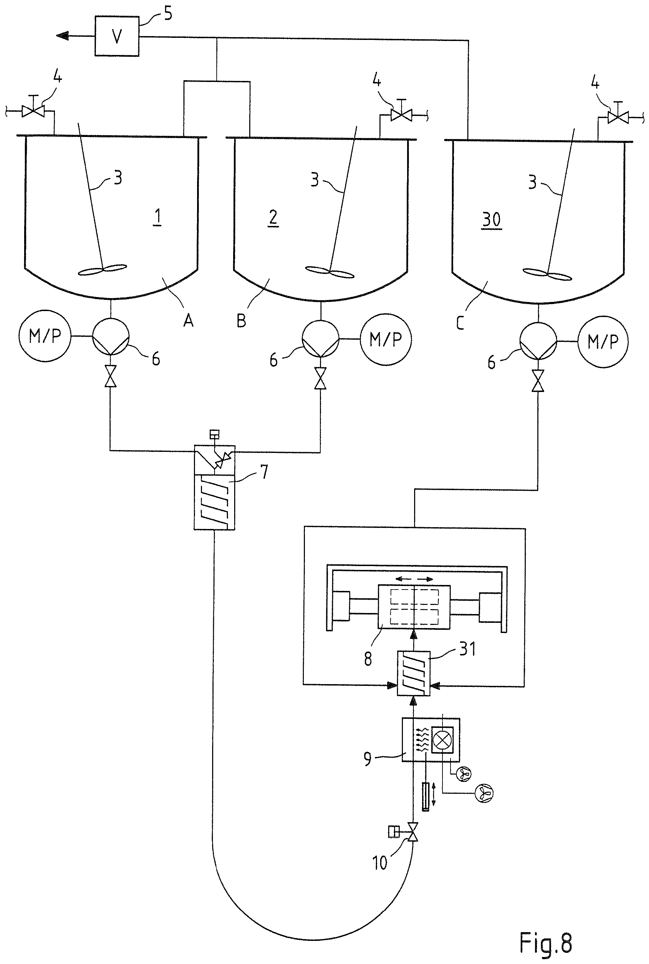

Ein weiteres Ausführungsbeispiel einer erfindungsgemäßen Vorrichtung ist in Fig. 8 dargestellt. Dort ist die Verarbeitung eines Dreikomponenten-Silikons beschrieben. Dabei entsprechen die beiden linken Vorratsbehälter 1 und 2 sowie deren Ausrüstung mit Rührwerk 3 und Vakuumpumpe 5 zur Entgasung der Darstellung aus Fig. 1. Daneben befindet sich ein weiterer Vorratsbehälter 30 mit einer Komponente C, an dessen Ausgang sich wiederum eine Dosierpumpe 6 befindet. Als dritte Komponente C kann bevorzugt eine Farbe dienen, welche es ermöglicht, das Formteil aus dem Gemisch AB beliebig einzufärben.

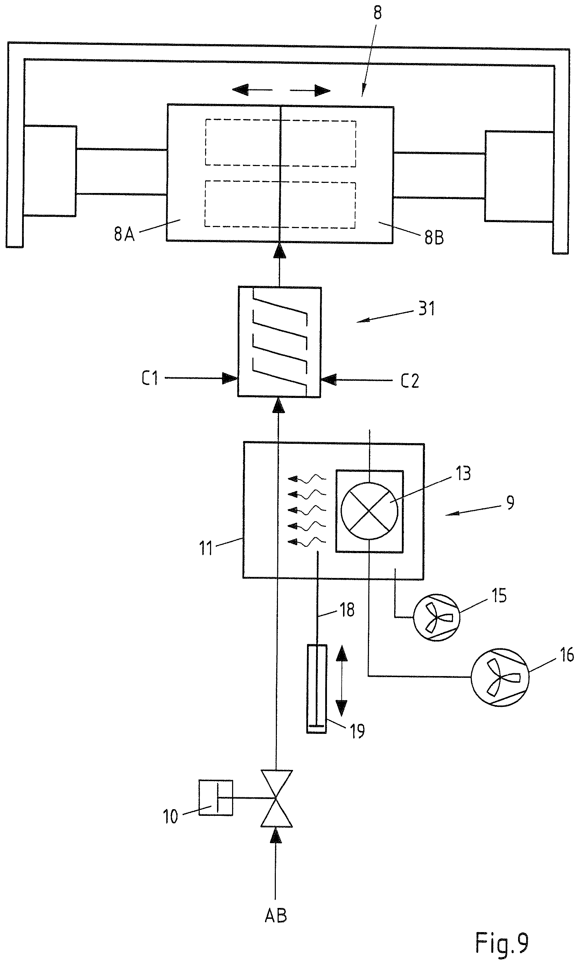

Die abgehende Leitung mit der Komponente C wird nachfolgend in zwei Teilströme C1 und C2 geteilt und in einer Zuführeinheit 31 dem Gemisch AB zugemischt, welches dort bereits die UV-Licht-Bestrahlungseinheit 9 verlassen hat. Die Zuführeinheit 31 ist dabei unmittelbar zwischen der UV-Licht-Bestrahlungseinheit 9 und der Gießform 8 angeordnet, wie auch aus der vergrößerten Darstellung in Fig. 9 hervorgeht.

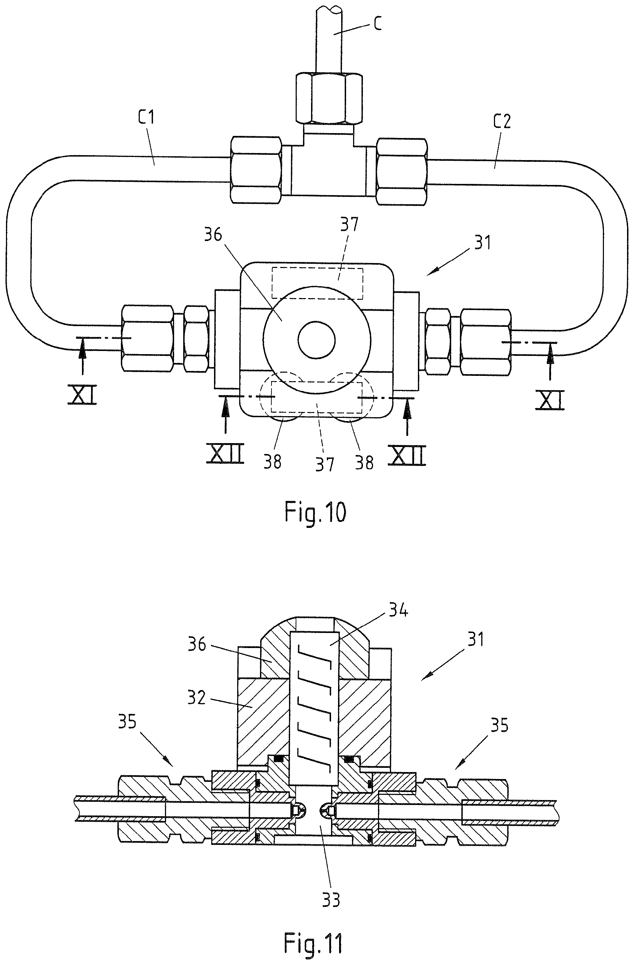

Der Aufbau der Zuführeinheit 31 lässt sich besonders gut den Figuren 10 bis 12 entnehmen. Fig. 10 zeigt zunächst die Zuführeinheit 31 in einer Draufsicht, man erkennt deutlich die Zufuhr der beiden Teilströme C1 und C2 der Komponente C. Der eigentliche Aufbau der Zuführeinheit 31 geht deutlich aus der ihren Vertikalschnitt zeigenden Fig. 11 hervor. Man erkennt zunächst ein Gehäuse 32, welches unten einen Einlass 33 und einen darüber angeordneten statischen Mischer 34 aufweist. Im Bereich des Einlasses münden zwei Einspritzdüsen 35, durch die die beiden Teilströme C1 und C2 der dritten Komponente C dem bereits UV-Licht aktivierten Gemisch AB zugeführt werden. Bevorzugt sind die Einspritzdüsen 35 mit Schnellkupplungen versehen, die eine einfache Montage sowie eine gute Reinigung und Wartung gestatten. Darüber hinaus verhindern die Schnellkupplungen zuverlässig, dass Luft in die Komponente C gelangen kann. Im statischen Mischer 34 erfolgt dann eine innige Mischung des Gemisches ABC, bevor das Gemisch durch den als Dichtkugel ausgeführten Adapter 36 unmittelbar der oberhalb der Zuführeinheit 31 angeordneten Gießform 8 zugeführt wird.

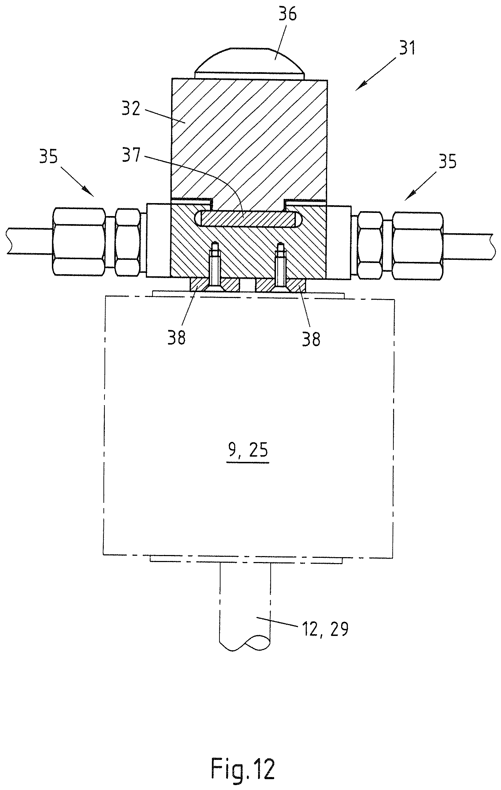

Fig. 12 zeigt schließlich in einem weiteren Vertikalschnitt der Zuführeinheit 31 entlang der Linie XII-XII aus Fig. 10, dass im unteren Teil des Gehäuses 32 beidseitig Magnete 37 angeordnet sind, die den unteren Teil mit dem oberen Teil des Gehäuses 32 zusammenhalten. Im dargestellten und insoweit bevorzugten Ausführungsbeispiel sind die Magnete 37 als Quadermagnete ausgeführt. Ferner sind am Fuße des Gehäuses 32 noch zwei weitere Magnete 38 vorgesehen, die bevorzugt als Topfmagnete mit einer mittigen Bohrung ausgeführt sind und ein einfaches Aufstecken auf die Oberseite der UV-Licht-Bestrahlungseinheit 9 bzw. 25 erlauben. Es versteht sich, dass die Glasrohre 12 bzw. 29 der jeweils eingesetzten UV-Licht-Bestrahlungseinheit 9 bzw. 25 so weit nach oben ragen, dass sie dicht mit dem Einlass 33 des Gehäuses 32 der Zuführeinheit 31 abschließen.

Es ist klar, dass die in den Figuren gezeigten Ausführungsformen nur beispielhafte Ausgestaltungen darstellen, die die vorliegende Erfindung nicht beschränken sollen. Vielmehr ist gerade durch das zweite Ausführungsbeispiel der UV-Licht-Bestrahlungseinheit gezeigt, dass ein modularer Aufbau der UV-Behandlungsstrecke die erfindungsgemäße Vorrichtung optimal an beliebige Anwendungsfälle und unterschiedlichste Gießformen jedweder Größe und Geometrie anpassen lässt.

## Patentansprüche

1. Verfahren zur Herstellung von Kunststoffformkörpern aus einem Gemisch mehrerer Komponenten, von denen wenigstens eine mittels UV-Licht aushärtet, wobei die lichtempfindliche Komponente ohne Lichteinfall gelagert und in einem Dosiermischer vakuumaufbereitet wird und wobei die Komponenten über Dosierpumpen im richtigen Mischungsverhältnis in einem statischen Mischer ohne Lichtkontakt gemischt werden,
wobei das Gemisch mittels der Dosierpumpen einer UV-Licht-Bestrahlungseinheit zugeführt, dort durch UV-Strahlung bestrahlt wird und anschließend in die Gießform fließt, wo es endgültig aushärtet, und wobei die UV-Strahlenintensität im Verhältnis zur Durchflussmenge des Gemisches geregelt wird.

2. Verfahren nach Anspruch 1,
**dadurch gekennzeichnet, dass**
das Verbundgemisch ein UV-aushärtendes Zweikomponenten-Silikon ist.

3. Verfahren nach Anspruch 1,
**dadurch gekennzeichnet, dass**
das Verbundgemisch ein UV-aushärtendes Dreikomponenten-Silikon ist.

4. Verfahren nach einem der Ansprüche 1 bis 3,
**dadurch gekennzeichnet, dass**
die Temperatur des Gemisches in der UV-Licht-Bestrahlungseinheit überwacht wird.

5. Verfahren nach einem der Ansprüche 1 bis 4,
**dadurch gekennzeichnet, dass**
die UV-Licht-Bestrahlungseinheit zu Reinigungs- oder Wartungszwecken geöffnet und/oder geteilt werden kann.

6. Verfahren nach einem der Ansprüche 3 bis 5,
**dadurch gekennzeichnet, dass**
die Herstellung mittels einer Dreikomponenten-Vakuum-Misch- und Dosieranlage erfolgt, in der vor der UV-Licht-Bestrahlung zwei der Komponenten gemischt werden und zwischen der Bestrahlung und dem Eintritt in die Gießform das Zumischen der dritten Komponente erfolgt.

7. Vorrichtung zur Herstellung von Kunststoffformkörpern aus einem Gemisch mehrerer Komponenten (A, B, C), von denen wenigstens eine mittels UV-Licht aushärtet, mit einer Gießform (8) und mit wenigstens einer UV-Licht-Bestrahlungseinheit (9) zum Aktivieren des lichtempfindlichen Gemisches (AB),
**dadurch gekennzeichnet, dass**
die wenigstens eine UV-Licht-Bestrahlungseinheit (9) ein umschlossenes Gehäuse (11) mit einem Eingang und einem Ausgang für das Gemisch (AB) aufweist, dass das Gemisch (AB) durch ein Glasrohr (12) durch das Gehäuse (11) fließt, dass zur Messung der UV-Strahlungsintensität im Gehäuse (11) ein UV-Intensitätssensor (21) angeordnet ist, dass die UV-Lichtquelle als UV-Strahler (13) ausgebildet ist, und dass die Vorrichtung mehrere der Anzahl der Komponenten (A, B, C) entsprechende Dosiermischer (1, 2, 30) zur Vakuumaufbereitung der einzelnen Komponenten (A, B, C), wobei jedem Dosiermischer (1, 2, 30) eine Dosierpumpe (6) nachgeordnet ist, und wenigstens einen statischen Mischer (7) aufweist.

8. Vorrichtung nach Anspruch 7,
**dadurch gekennzeichnet, dass**
die wenigstens eine UV-Licht-Bestrahlungseinheit (9) unmittelbar vor der Gießform (8) angeordnet ist.

9. Vorrichtung nach Anspruch 7,
**dadurch gekennzeichnet, dass** sich zwischen der UV-Licht-Bestrahlungseinheit (9) und der Gießform (8) eine Zuführeinheit (31) zum Einspritzen einer Komponente (C) in den Fluss des Gemisches (AB) befindet.

10. Vorrichtung nach Anspruch 9,
**dadurch gekennzeichnet, dass**
die Zuführeinheit (31) mehrere über ihren Umfang verteilt angeordnete seitliche Einspritzdüsen (35) aufweist und dass der Fluss der Komponente (C) vor der Zuführeinheit (31) aufgeteilt ist.

11. Vorrichtung nach Anspruch 10,
**dadurch gekennzeichnet, dass**
zwei Einspritzdüsen (35) auf gegenüber liegenden Seiten der Zuführeinheit (31) vorgesehen sind.

12. Vorrichtung nach Anspruch 10 oder 11,
**dadurch gekennzeichnet, dass**
die Einspritzdüsen (35) auswechselbar ausgestaltet sind.

13. Vorrichtung nach einem der Ansprüche 9 bis 12,
**dadurch gekennzeichnet, dass**
hinter der Zuführeinheit (31) ein statischer Mischer (35) angeordnet ist.

14. Vorrichtung nach einem der Ansprüche 9 bis 13,
**dadurch gekennzeichnet, dass**
zum Zusammenhalten des Gehäuses (32) der Zuführeinheit (31) Magnete (37) vorgesehen sind.

15. Vorrichtung nach einem der Ansprüche 9 bis 14,
**dadurch gekennzeichnet, dass**
die Zuführeinheit (31) auf die UV-Licht-Bestrahlungseinheit (9) mit Hilfe von Magneten (38) aufsteckbar ist.

16. Vorrichtung nach Anspruch 7,
**dadurch gekennzeichnet, dass**
der UV-Strahler (13) von einem Glasrohr (14) umgeben ist.

17. Vorrichtung nach den Ansprüchen 7 und 16,
**dadurch gekennzeichnet, dass**
das Gehäuse (11) der UV-Licht-Bestrahlungseinheit (9) und/oder das Glasrohr (14) des UV-Strahlers (13) jeweils einen eigenständigen Lüfter (15, 16) aufweist.

18. Vorrichtung nach einem der Ansprüche 1 bis 17,
**dadurch gekennzeichnet, dass**
das Gehäuse (11) innen zur besseren Verteilung und Einbringung der UV-Strahlen mit Spiegelreflektoren (17) versehen ist.

19. Vorrichtung nach Anspruch 18,
**dadurch gekennzeichnet, dass**
die Spiegelreflektoren (17) eine ellipsenförmige Anordnung aufweisen und dass das Glasrohr (12) für das Gemisch (AB) im ersten Brennpunkt und der UV-Strahler (13) im zweiten Brennpunkt der Ellipse angeordnet sind.

20. Vorrichtung nach einem der Ansprüche 8 bis 19,
**dadurch gekennzeichnet, dass**
das Gehäuse (11) im Bereich des Glasrohres (12) für das Gemisch (AB) eine Öffnungsebene (O) aufweist.

21. Vorrichtung nach Anspruch 20,
**dadurch gekennzeichnet, dass**
die Öffnungsebene (O) mit der Trennebene der Gießform (8) fluchtet und das Gehäuse (11) gemeinsam mit der Gießform (8) geöffnet wird.

22. Vorrichtung nach einem der Ansprüche 19 bis 21,
**dadurch gekennzeichnet, dass**
zum Schutz gegen UV-Strahlung und Blendung bei geöffnetem Gehäuse (11) eine Blendschutzkappe (18) vor den UV-Strahler (13) bewegbar ist.

23. Vorrichtung nach einem der Ansprüche 7 bis 22,
**dadurch gekennzeichnet, dass**
zur Temperaturmessung und -überwachung im Gehäuse (11) ein Pyrometer, insbesondere ein Miniatur-Pyrometer (20) angeordnet ist.

24. Vorrichtung nach einem der Ansprüche 7 bis 23,
**dadurch gekennzeichnet, dass**
im Gehäuse ein Widerstandsthermometer (22) vorhanden ist.

25. Vorrichtung nach Anspruch 7 oder 8,
**dadurch gekennzeichnet, dass**
die UV-Lichtquelle außerhalb der UV-Licht-Bestrahlungseinheit angeordnet ist und dass Lichtwellenleiter (24) zur Übertragung des UV-Lichts von der UV-Lichtquelle zur Bestrahlungsstrecke vorhanden sind.

26. Vorrichtung nach Anspruch 25,
**dadurch gekennzeichnet, dass**
die Lichtwellenleiter (24) in einem eine Behandlungsstrecke (26) bildenden Gehäuse (25) münden und bis an ein Glasrohr (29 für das Gemisch heranreichen.

27. Vorrichtung nach Anspruch 26,
**dadurch gekennzeichnet, dass**
die Lichtwellenleiter (24) sternförmig zur Mitte der Behandlungsstrecke (26) ausgerichtet angeordnet sind.

28. Vorrichtung nach Anspruch 27,
**dadurch gekennzeichnet, dass**
zur Erhöhung der UV-Strahlungsleistung mehrere sternförmige Lichtwellenleiter in parallelen Ebenen (E₁, E₂, E₃) übereinander angeordnet sind.

29. Vorrichtung nach Anspruch 26,
**dadurch gekennzeichnet, dass**
das Gehäuse (25) im Bereich der Behandlungsstrecke (26) für das Gemisch (AB) eine Öffnungsebene (O) aufweist.

30. Vorrichtung nach Anspruch 29,
**dadurch gekennzeichnet, dass**
das Gehäuse (25) zwei Halbschalen (25A, 25B) aufweist, von denen jeweils eine Halbschale (25A bzw. 25B) an einer darüber angeordneten Gießformhälfte befestigt ist.

31. Vorrichtung nach einem der Ansprüche 28 bis 30,
**dadurch gekennzeichnet, dass**
das Gehäuse (25) einen bezüglich der Ebenen (E₁, E₂, E₃) der Lichtwellenleiter (24) modularen Aufbau aufweist.

## Claims

1. Method for producing shaped plastics material members from a composition of several components, of which at least one hardens by means of UV light, wherein the light-sensitive component is stored without incident light and is prepared for pressure reduction in a metering mixer and wherein the components are mixed by means of metering pumps in the correct mixing ratio in a static mixer without any light contact,
wherein the composition is supplied by means of the metering pumps to a UV light irradiation unit, is irradiated at that location by means of UV radiation and subsequently flows into the casting mould where it ultimately hardens, and wherein the UV radiation intensity is controlled in relation to the throughflow quantity of the composition.

2. Method according to Claim 1,
**characterised in that** the compound composition is a UV-hardening two-component silicone.

3. Method according to Claim 1,
**characterised in that** the compound composition is a UV-hardening three-component silicone.

4. Method according to any one of Claims 1 to 3,
**characterised in that** the temperature of the composition in the UV light irradiation unit is monitored.

5. Method according to any one of Claims 1 to 4,
**characterised in that** the UV light irradiation unit can be opened and/or divided for cleaning or maintenance purposes.

6. Method according to any one of Claims 3 to 5,
**characterised in that** the production is carried out by means of a three-component reduced pressure mixing and metering installation in which two of the components are mixed before the UV light irradiation and the third component is added between the irradiation and the introduction into the casting mould.

7. Device for producing shaped plastics material members from a composition of several components (A, B, C), of which at least one hardens by means of UV light, having a casting mould (8) and having at least one UV light irradiation unit (9) for activating the light-sensitive composition (AB),
**characterised in that** the at least one UV light irradiation unit (9) has an enclosed housing (11) having an input and an output for the composition (AB), **in that** the composition (AB) flows through a glass pipe (12) through the housing (11), **in that** a UV intensity sensor (21) is arranged in order to measure the UV radiation intensity in the housing (11), **in that** the UV light source is constructed as a UV radiator (13) and **in that** the device has a plurality of metering mixers (1, 2, 30) corresponding to the number of components (A, B, C) for preparation for pressure reduction of the individual components (A, B, C), wherein a metering pump (6) is arranged downstream of each metering mixer (1, 2, 30), and has at least one static mixer (7).

8. Device according to Claim 7,
**characterised in that** the at least one UV light irradiation unit (9) is arranged directly in front of the casting mould (8).

9. Device according to Claim 7,
**characterised in that** a supply unit (31) for injecting a component (C) into the flow of the composition (AB) is located between the UV light irradiation unit (9) and the casting mould (8).

10. Device according to Claim 9,
**characterised in that** the supply unit (31) has a plurality of lateral injection nozzles (35) which are arranged so as to be distributed over the periphery thereof and **in that** the flow of the component (C) is divided upstream of the supply unit (31).

11. Device according to Claim 10,
**characterised in that** two injection nozzles (35) are provided at opposing sides of the supply unit (31).

12. Device according to Claim 10 or 11,
**characterised in that** the injection nozzles (35) are constructed so as to be able to be replaced.

13. Device according to any one of Claims 9 to 12, **characterised in that** a static mixer (35) is arranged downstream of the supply unit (31).

14. Device according to any one of Claims 9 to 13, **characterised in that** magnets (37) are provided in order to hold together the housing (32) of the supply unit (31).

15. Device according to any one of Claims 9 to 14,
**characterised in that** the supply unit (31) can be fitted to the UV light irradiation unit (9) by means of magnets (38).

16. Device according to Claim 7,
**characterised in that** the UV radiator (13) is surrounded by a glass pipe (14).

17. Device according to Claims 7 and 16,
**characterised in that** the housing (11) of the UV light irradiation unit (9) and/or the glass pipe (14) of the UV radiator (13) each have an independent ventilator (15, 16).

18. Device according to any one of Claims 1 to 17,
**characterised in that** the housing (11) is provided at the inner side with mirror reflectors (17) for better distribution and introduction of the UV rays.

19. Device according to Claim 18,
**characterised in that** the mirror reflectors (17) have an elliptical arrangement and **in that** the glass pipe (12) for the composition (AB) is arranged at the first focal point and the UV radiator (13) is arranged at the second focal point of the ellipse.

20. Device according to any one of Claims 8 to 19,
**characterised in that** the housing (11) has an opening plane (0) for the composition (AB) in the region of the glass pipe (12).

21. Device according to Claim 20,
**characterised in that** the opening plane (0) is in alignment with the separation plane of the casting mould (8) and the housing (11) is opened together with the casting mould (8).

22. Device according to any one of Claims 19 to 21,
**characterised in that**, for protection against UV radiation and glare when the housing (11) is open, an anti-glare hood (18) can be moved in front of the UV radiator (13).

23. Device according to any one of Claims 7 to 22,
**characterised in that** a pyrometer, in particular a miniature pyrometer (20), is arranged for temperature measurement and monitoring in the housing (11).

24. Device according to any one of Claims 7 to 23,
**characterised in that** a resistance thermometer (22) is provided in the housing.

25. Device according to Claim 7 or 8,
**characterised in that** the UV light source is arranged outside the UV light irradiation unit and **in that** optical fibres (24) for transmitting the UV light from the UV light source to the irradiation path are provided.

26. Device according to Claim 25,
**characterised in that** the optical fibres (24) open in a housing (25) which forms a processing path (26) and extend as far as a glass pipe (29) for the composition.

27. Device according to Claim 26,
**characterised in that** the optical fibres (24) are arranged in a star-shaped manner orientated towards the centre of the processing path (26).

28. Device according to Claim 27,
**characterised in that** in order to increase the UV radiation power a plurality of star-shaped optical fibres are arranged one above the other in parallel planes (E₁, E₂, E₃).

29. Device according to Claim 26,
**characterised in that** the housing (25) has an opening plane (0) for the composition (AB) in the region of the processing path (26).

30. Device according to Claim 29,
**characterised in that** the housing has two half-shells (25A, 25B) of which one half-shell (25A or 25B) is secured to a casting mould half which is arranged thereabove, respectively.

31. Device according to any one of Claims 28 to 30,
**characterised in that** the housing (25) has a modular structure with respect to the planes (E₁, E₂, E₃) of the optical fibres (24).

## Revendications

1. Procédé de fabrication de corps moulés en matière synthétique à partir d'un mélange de plusieurs composants dont au moins l'un est durci au moyen de lumière UV, sachant que le composant sensible à la lumière est stocké sans incidence de lumière et est traité sous vide dans un mélangeur doseur et sachant que les composants sont mélangés par l'intermédiaire de pompes de dosage dans le rapport de mélange correct, dans un mélangeur statique, sans contact avec la lumière,
sachant que le mélange est conduit à une unité de rayonnement de lumière UV, où il est soumis à un rayonnement UV, et s'écoule ensuite dans le moule, où il est définitivement durci, et sachant que l'intensité du rayonnement UV est régulée en fonction du débit de passage du mélange.

2. Procédé selon la revendication 1,
**caractérisé en ce que** le mélange composite est une silicone à deux composants, qui peut être durcie par UV.

3. Procédé selon la revendication 1,
**caractérisé en ce que** le mélange composite est une silicone à trois composants, qui peut être durcie par UV.

4. Procédé selon l'une des revendications 1 à 3,
**caractérisé en ce que** la température du mélange est contrôlée dans l'unité de rayonnement de lumière UV.

5. Procédé selon l'une des revendications 1 à 4,
**caractérisé en ce que** l'unité de rayonnement de lumière UV peut être ouverte et / ou divisée à des fins de nettoyage ou de maintenance.

6. Procédé selon l'une des revendications 3 à 5,
**caractérisé en ce que** la fabrication est effectuée au moyen d'une installation de mise sous vide, de mélange et de dosage de trois composants, dans laquelle deux composants sont mélangés avant l'irradiation à la lumière UV et le troisième est ajouté et mélangé entre l'irradiation et l'entrée dans le moule.

7. Dispositif pour la fabrication de corps moulés en matière synthétique à partir d'un mélange de plusieurs composants (A, B, C) dont au moins l'un durcit à la lumière UV, avec un moule (8) et avec au moins une unité de rayonnement de lumière UV (9) pour l'activation du mélange (AB) sensible à la lumière.
**caractérisé en ce que** l'au moins une unité de rayonnement de lumière UV (9) est dotée d'un carter enclos (11), qui présente une entrée et une sortie pour le mélange (AB), que le mélange (AB) coule par un tube en verre (12) à travers le carter (11), qu'un détecteur d'intensité UV (21) est installé pour mesurer l'intensité du rayonnement UV dans le carter (11), que la source de lumière UV est réalisée sous la forme d'un émetteur UV (13) et que le dispositif est doté de plusieurs mélangeurs doseurs (1, 2, 30) en nombre correspondant au nombre des composants (A, B, C) pour le traitement sous vide des différents composants (A, B, C), sachant qu'à chaque mélangeur doseur (1, 2, 30) est associée une pompe de dosage (6), et comprend au moins un mélangeur statique (7).

8. Dispositif selon la revendication 7,
**caractérisé en ce que** l'au moins une unité de rayonnement de lumière UV (9) est disposée directement en amont du moule (8).

9. Dispositif selon la revendication 7,
**caractérisé en ce que,** pour l'injection d'un composant (C) dans le flux de mélange (A, B), une unité d'alimentation (31) est disposée entre l'unité de rayonnement de lumière UV (9) et le moule (8).

10. Dispositif selon la revendication 9,
**caractérisé en ce que** l'unité d'alimentation (31) est dotée de plusieurs buses d'injection (35) latérales, réparties sur sa périphérie, et que le flux de composant (C) est divisé en amont de l'unité d'alimentation (31)

11. Dispositif selon la revendication 10,
**caractérisé en ce que** deux buses d'injection (35) sont prévues sur des côtés de l'unité d'alimentation (31) opposés.

12. Dispositif selon revendication 10 ou 11,
**caractérisé en ce que** les buses d'injection (35) sont de conception interchangeable.

13. Dispositif selon l'une des revendications 9 à 12,
**caractérisé en ce qu'**un mélangeur statique (35) est disposé en aval de l'unité d'alimentation (31).

14. Dispositif selon l'une des revendications 9 à 13,
**caractérisé en ce que** des aimants (37 sont prévus pour maintenir l'assemblage du carter (32) de l'unité d'alimentation (31).

15. Dispositif selon l'une des revendications 9 à 14,
**caractérisé en ce que** l'unité d'alimentation (31) peut être rattachée à l'unité de rayonnement de lumière UV (9) à l'aide d'aimants (38).

16. Dispositif selon la revendication 7,
**caractérisé en ce que** l'émetteur de rayonnement UV (13) est entouré par un tube en verre (14).

17. Dispositif selon les revendications 7 et 16,
**caractérisé en ce que** le carter (11) de l'unité de rayonnement de lumière UV (9) et / ou le tube en verre (14) de l'émetteur UV (13) sont dotés chacun d'un ventilateur autonome (15, 16).

18. Dispositif selon l'une des revendications 1 à 17,
**caractérisé en ce que** le carter (11) est pourvu, à l'intérieur, de miroirs réflecteurs (17) pour l'obtention d'une meilleure répartition et application des rayons UV.

19. Dispositif selon la revendication 18,
**caractérisé en ce que** les miroirs réflecteurs (17) sont agencés en forme d'ellipse et que le tube en verre (12) pour le mélange (AB) est disposés dans le premier point de convergence et que l'émetteur UV (13) est disposé dans le deuxième point de convergence.

20. Dispositif selon l'une des revendications 8 à 19,
**caractérisé en ce que** le carter (11) présente dans la section du tube en verre (12) un plan d'ouverture (0) pour le mélange (AB).

21. Dispositif selon la revendication 20,
**caractérisé en ce que** le plan d'ouverture (0) est en alignement avec le plan de séparation du moule (8) et que le carter (11) est ouvert en commun avec le moule (8).

22. Dispositif selon l'une des revendications 19 à 21,
**caractérisé en ce que,** pour la protection contre le rayonnement UV et l'éblouissement quand le carter (11) est ouvert, un capuchon anti-éblouissement (18) peut être déplacé devant l'émetteur UV (13).

23. Dispositif selon l'une des revendications 7 à 22,
**caractérisé en ce que,** pour la mesure et le contrôle de la température dans le carter (11), un pyromètre, en particulier un pyromètre miniature (20) est installé.

24. Dispositif selon l'une des revendications 7 à 23,
**caractérisé en ce que,** dans le carter, est prévu un thermomètre à résistance (22).

25. Dispositif selon revendication 7 ou 8,
**caractérisé en ce que** la source de lumière UV est disposée en dehors de l'unité de rayonnement de lumière UV et que des guides d'ondes lumineuses (24) sont prévus pour la transmission de la lumière UV de la source de lumière UV au trajet de rayonnement.

26. Dispositif selon la revendication 25,
**caractérisé en ce que** les guides d'ondes lumineuses (24) débouchent dans un carter (25) formant un trajet de rayonnement (26) et parviennent jusqu'à un tube en verre (29) pour le mélange.

27. Dispositif selon la revendication 26,
**caractérisé en ce que** les guides d'ondes lumineuses (24) sont disposés en forme d'étoile en étant orientés vers le centre du trajet de traitement (26).

28. Dispositif selon la revendication 27,
**caractérisé en ce que,** pour augmenter la puissance de rayonnement UV, plusieurs guides d'ondes lumineuses en forme d'étoiles sont disposés les uns au-dessus des autres sur des plans (E₁, E₂, E₃) parallèles.

29. Dispositif selon la revendication 26,
**caractérisé en ce que** le carter (25) est doté d'un plan d'ouverture (0) dans la région du trajet de traitement (26) du mélange (AB).

30. Dispositif selon la revendication 29,
**caractérisé en ce que** le carter (25) est doté de deux demi-coques (25A, 25B), dont chacune (25A respectivement 25B) est fixée à une moitié de moule disposée au-dessus d'elle.

31. Dispositif selon l'une des revendications 28 à 30,
**caractérisé en ce que** le carter (25) est doté d'une structure modulaire en ce qui concerne les plans (E₁, E₂, E₃) des guides d'ondes lumineuses (24).
